# EUROPEAN PATENT APPLICATION

(11) **EP 4 761 212 A1**
(43) Date of publication of application: **17.06.2026**
(21) Application number: 24824734.8
(22) Date of filing: 17.07.2024
(51) Int. Cl.: H04L 45/28

(54) **SERVICE DATA TRANSMISSION METHOD AND APPARATUS, ELECTRONIC DEVICE, AND STORAGE MEDIUM**

(30) Priority: 10.08.2023 CN 202311009428
(71) Applicant: China Mobile Group Design Institute Co., Ltd., Beijing 100080 (CN); China Mobile Communications Group Co., Ltd., Beijing 100032 (CN)
(72) Inventor: HE, Zheng, Beijing 100080 (CN); WANG, Yingchun, Beijing 100080 (CN); LI, Xin, Beijing 100080 (CN); TAN, Zhe, Beijing 100080 (CN); GAO, Zhiying, Beijing 100080 (CN); HUANG, Letian, Beijing 100080 (CN); TAO, Yuan, Beijing 100080 (CN); YANG, Xi, Beijing 100080 (CN); BAI, Ruixue, Beijing 100080 (CN); WANG, Liqiang, Beijing 100080 (CN); QU, Shaokai, Beijing 100080 (CN); DING, Yifan, Beijing 100080 (CN); DOU, Xiaolei, Beijing 100080 (CN); GUO, Yanchun, Beijing 100080 (CN); XI, Jianhua, Beijing 100080 (CN); GAO, Junshi, Beijing 100080 (CN); YANG, Tianpu, Beijing 100080 (CN); WANG, Dongbing, Beijing 100080 (CN); SUN, Shuo, Beijing 100080 (CN); ZHOU, Huajun, Beijing 100080 (CN); YU, Wenjing, Beijing 100080 (CN); ZENG, Zhenlin, Beijing 100080 (CN); LI, Chang, Beijing 100080 (CN); LI, Deli, Beijing 100080 (CN); WANG, Linli, Beijing 100080 (CN); LI, Fenying, Beijing 100080 (CN); HU, Jitao, Beijing 100080 (CN)
(74) Representative: Maiwald GmbH
(86) International application number: PCT/CN2024/105830
(87) International publication number: WO 2025/031113

(57) **Abstract**

The disclosure provides a service data transmission method, a service data transmission apparatus, an electronic device and a storage medium, and related to the field of communication technologies. The service data transmission method includes: obtaining, during a transmission process of service data of a fixed network, transmission status information of the service data; and in response to determining that the transmission status information indicates that the fixed network is faulty, sending the service data to a wireless network access device, wherein the wireless network access device is configured to transmit the service data to a network access device of a non-faulty fixed network. The solution provided by the disclosure can improve the transmission reliability of the service data.

## Description

### CROSS REFERENCE TO RELATED APPLICATIONS

This application is based on and claims priority to Chinese patent application No. 202311009428.8, filed on August 10, 2023, the entire content of which is incorporated herein by reference.

### TECHNICAL FIELD

The disclosure relates to the field of communication technologies, in particular to a service data transmission method, a service data transmission apparatus, an electronic device and a storage medium.

### BACKGROUND

With the development of communication technologies, various carrying solutions have appeared for communication networks of the ground communication or satellite communication. For example, the network carrying solutions commonly used in the fifth-generation wireless cellular technology (5G) can include a slicing packet network (SPN), a smart transport network (STN), etc. The network carrying solutions commonly used in the fourth generation wireless cellular technology (4G) can include a packet transport network (PTN), an IP radio access network (IPRAN), etc.

In related arts, in order to ensure the reliability for transmitting service data by fixed networks in various bearing solutions, a protection mechanism can be configured in the fixed network to quickly restore the transmission of the service data when the fixed network fails.

However, once the protection mechanism provided by the related arts also fails, there will be a situation where the service data cannot be transmitted, which will lead to a decrease in a service carrying reliability of the fixed network.

### SUMMARY

The disclosure provides a service data transmission method, a service data transmission apparatus, an electronic device and a storage medium, in order to improve a transmission reliability of service data in a fixed network. The technical solutions of the disclosure is as follows.

According to a first aspect of the disclosure, a service data transmission method is provided. The service data transmission method includes: obtaining, during a transmission process of service data of a fixed network, transmission status information of the service data; and in response to determining that the transmission status information indicates that the fixed network is faulty, sending the service data to a wireless network access device, in which the wireless network access device is configured to transmit the service data to a network access device of a non-faulty fixed network.

According to a second aspect of the disclosure, a service data transmission apparatus is provided, and the apparatus is included in a network access device of a fixed network. The apparatus includes: a monitoring module, configured to obtain, during a transmission process of service data, transmission status information of the service data; and a sending module, configured to send, in response to determining that the transmission status information indicates that the fixed network is faulty, the service data to a wireless network access device, in which the wireless network access device is configured to transmit the service data to a network access device of a non-faulty fixed network.

According to a third aspect of the disclosure, an electronic device is provided, and the electronic device includes: a processor, and a memory for storing instructions, in which when the instructions are executed by the processor, the method according to the first aspect is performed by the processor.

According to a fourth aspect of the disclosure, a non-transitory computer-readable storage medium having computer instructions stored thereon, in which the computer instructions are configured to cause the computer to perform the method according to the first aspect.

According to the service data transmission method, the service data transmission apparatus, the electronic device and the storage medium, the network access device of the fixed network can monitor the transmission status information of the service data transmitted in the fixed network. In a case of determining that the fixed network is faulty, the service data is sent to the wireless network access device through a wireless link established with the wireless network access device, thus the wireless network access device can transmit the service data to the network access device of the non-faulty fixed network. In this way, according to the disclosure, in a case where the fixed network carrying the service data currently is faulty, the wireless network access device transmits the service data to the network access device of the non-faulty fixed network, thereby improving the transmission reliability of the service data.

### BRIEF DESCRIPTION OF THE DRAWINGS

More details, features and advantages of the disclosure will be disclosed in the following description of the exemplary embodiments in combination with the attached drawings.
FIG. 1 is a schematic diagram of an implementation scenario of a service data transmission method according to an exemplary embodiment of the disclosure.
FIG. 2 is a flowchart of a service data transmission method according to an exemplary embodiment of the disclosure.
FIG. 3 is a schematic block diagram of a service data transmission apparatus according to an exemplary embodiment of the disclosure.
FIG. 4 is a schematic block diagram of a chip according to an exemplary embodiment of the disclosure.
FIG. 5 is a structural block diagram of an exemplary electronic device configured to implement the embodiments of the disclosure.

### DETAILED DESCRIPTION

The embodiments of the disclosure will be described in more detail below with reference to the accompanying drawings. Although certain embodiments of the disclosure are shown in the accompanying drawings, it should be understood that the disclosure may be implemented in various forms and should not be construed as limited to the embodiments set forth herein. Instead, these embodiments are provided for a more thorough and complete understanding of the disclosure. It should be understood that the accompanying drawings and embodiments disclosed herein are for illustrative purposes only and are not intended to limit the scope of protection of the disclosure.

It should be understood that the various steps described in the method embodiments of the disclosure may be executed in different orders and/or in parallel. In addition, the method embodiments provided in the disclosure may include additional steps and/or omitted steps. The scope of this disclosure is not limited in this regard.

The term "including" and its variations used in the disclosure are open-ended, meaning "including but not limited to". The term "based" means "based at least in part". The term "an embodiment" means "at least one embodiment". The term "another embodiment" means "at least one further embodiment". The term "some embodiments" means "at least some embodiments". Relevant definitions of other terms will be provided in the following description. It should be noted that expressions "first" and "second" mentioned in the disclosure are only used to distinguish different apparatus, modules, or units, and are not intended to limit the order or interdependence of the functions performed by these apparatus, modules, or units.

It should be noted that modifications of "one" and "a plurality of" mentioned in the disclosure are illustrative rather than restrictive, and those skilled in the art should understand that unless otherwise explicitly stated in the context, thoes modifications should be understood as "one or more".

The names of messages or information exchanged between multiple apparatuses in the embodiments of the disclosure are merely used for illustrative purposes, and are not intended to limit the scope of these messages or information.

In related arts, the carrying network of the communication network service can transmit service data based on a fixed network or a wireless network. The fixed network refers to a communication network that transmits data through a wired link, and the wireless network refers to a communication network that transmits through a wireless link. In general, in order to ensure the reliability for transmitting the service data by the fixed network in various carrying solutions, a protection switching mechanism can be configured in the fixed network. The protection switching mechanism refers to that a protection path is reserved for a working path for transmitting the service data, and when the working path fails and cannot transmit the network data, the corresponding service data will be switched to the protection path for transmission. In some embodiments, the protection switching mechanism can be an Automatic Protection Switching (APS) mechanism, an Optical Line Protection (OLP) mechanism, an Optical Multiplex Section Protect (OMSP) mechanism, or a Link Aggregation (LAG) mechanism.

For example, the APS mechanism can include: an APS mechanism based on Multi-Protocol Label Switching Transport Profile (MPLS-TP), an APS mechanism based on Segment Routing Transport Profile-Traffic Engineering (SR-TP), and an APS mechanism based on Pseudo-Wire (PW). The APS mechanism based on MPLS-TP or SR-TP is a tunnel layer protection mechanism, which can configure a working tunnel and a protection tunnel in a fixed network. When the working tunnel fails, the traffic is switched to the protection tunnel. The APS mechanism based on PW is a pseudo-line layer protection mechanism, which can configure a working pseudo-line and a protection pseudo-line in a fixed network. When the working pseudo-line fails, the traffic is switched to the protection pseudo-line.

However, according to the protection switching mechanism provided in related arts, after the transmission path of the service data is switched, the normal transmission of the service data can be guaranteed in the case where the transmission on the protection path is normal. However, if the protection path is also abnormal, there will be a situation where the service data cannot be transmitted, resulting in a poor transmission reliability of the service data.

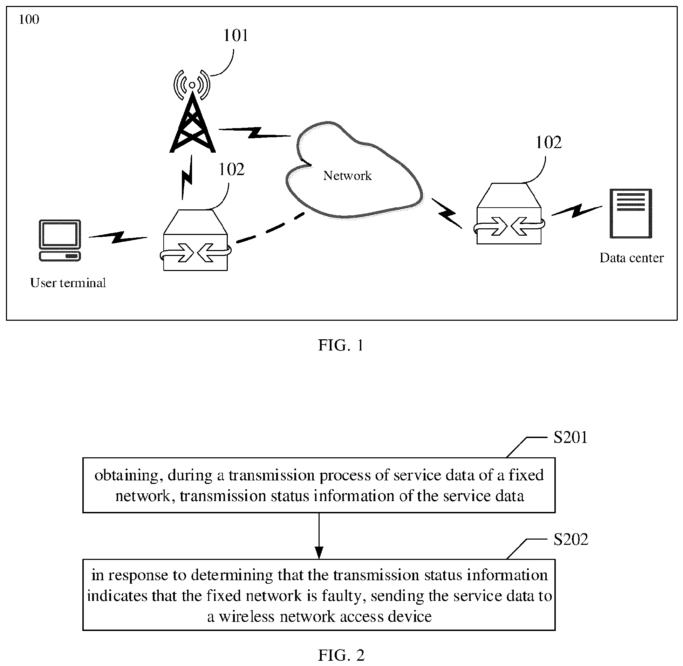

FIG. 1 is a schematic diagram of an implementation scenario of a service data transmission method according to an exemplary embodiment of the disclosure. As illustrated in FIG. 1, the implementation scenario 100 includes a wireless network access device 101 and a network access device 102 of a fixed network, where the wireless network access device 101 is configured to connect a terminal devices or a network device to a wireless network, and the wireless access device can include a wireless base station or a satellite. The network access device 102 can be an access device of the fixed network. For example, the network access device can include a Customer Premise Equipment (CPE), which is configured to connect service data that needs to be transmitted through a fixed network to a fixed network. In an actual scene, in addition to the wireless network access device and the network access device, there can be other device.

It should be noted that the transmission of service data can be referred to an interaction of service data on a data center side and a user side. Therefore, in a fixed network, the network access device can include a network access device on the data center side and a network access device on the user side.

As illustrated in FIG. 1, when the network access device performs a service data transmission solution according to an embodiment of the disclosure, the above wireless network access device 101 can establish a wireless link with the network access device 102 to realize the service data transmission solution according to the embodiment of the disclosure. FIG. 1 shows that when a service data sender is a terminal device on the user side, the wireless network access device 101 on the user side can establish a wireless link with the network access device 102 to realize the service data transmission solution according to the embodiment of the disclosure. It is understandable that when a service data sender is a network access device on the data center side, the wireless network access device (not shown in FIG. 1) on the data center side can also establish a wireless link with the corresponding network access device to realize the service data transmission solution according to the embodiment of the disclosure.

FIG. 2 is a flowchart of a service data transmission method according to an exemplary embodiment of the disclosure. The method can be applied in a network access device of a fixed network. As illustrated in FIG.2, the service data transmission method according to an embodiment of the disclosure can include steps S201-S202.

At S201, during a transmission process of service data of a fixed network, transmission status information of the service data is obtained.

At S202, in response to determining that the transmission status information indicates that the fixed network is faulty, the service data is sent to a wireless network access device.

The wireless network access device is configured to transmit the service data to a network access device of a non-faulty fixed network.

In summary, according to the service data transmission method provided by the embodiment of the disclosure, the network access device of the fixed network can monitor the transmission status information of the service data transmitted in the fixed network. When the fixed network is faulty, the service data is transmitted to the wireless network access device through a wireless link established with the wireless network access device. The wireless network access device can transmit the service data to the network access device of the non-faultyy fixed network. In this way, when the fixed network carrying service data currently is faulty, the service data can be transmitted to the network access device of the non-faulty fixed network through the wireless network access device, which improves a transmission reliability of the service data.

Specific implementations of each step in the embodiment shown in FIG. 2 are described in detail below.

In step S201, during the transmission process of the service data of the fixed network, the network access device can obtain the transmission status information of the service data.

In the embodiments of the disclosure, during the transmission process of the service data, the service data sent by a service data sender can be connected to the fixed network through the network access device of the service data sender. The network access device of the service data sender sends the service data to a network access device of a service data receiver through a wired link. The network access device of the service data receiver can send the service data to the service data receiver, so as to realize the service data transmission using the fixed network. The fixed network can include at least one type of network among a Slicing Packet Network (SPN) network, a Smart Transport Network (STN) network, a Packet Transport Network (PTN) network, an IP Radio Access Network (IPRAN) network, an Optical Transport Network (OTN) and a Passive Optical Network (PON).

For example, for the SPN network, the SPN network can provide a service data transmission service for different service scenarios, such as a SPN network that provides the service data transmission service for governments or enterprises, or a SPN network that provides the service data transmission service for video services. The service data sent by the service data sender can be connected to the SPN network that provides a private line service for the service data through the network access device of the service data sender. The SPN network can send the service data to the network access device of the service data receiver through a wired link. The network access device of the service data receiver can send the service data to the service data receiver, so as to realize the service data transmission based on the SPN network.

It should be noted that in the embodiments of the disclosure, the service data sender can be a user terminal, and the service data receiver can be a data center. The service data sent by the user terminal can include: service data sent by a wireless user terminal based on a wireless network access device. For example, the wireless user terminal sends the service data to the wireless network access device, and the wireless network access device sends the service data to the network access device of the fixed network through a feedback device. Alternatively, the wireless user terminal sends the service data based on a wireless routing device. For example, the wireless user terminal sends, based on the wireless routing device, the service data to the network access device of the fixed network through a wired link. Alternatively, the service data sent by the user terminal can include: service data sent by a wired user terminal based on a wired link, for example, a desktop computer sends the service data to the network access device of the fixed network based on the wired link.

In the transmission process of the service data, the process of obtaining the transmission status information of the service data by the network access device of the service data sender can include: after receiving the service data sent by the user terminal, the network access device on the user terminal side monitors a sending status of the service data to the network access device on the data center side, and obtains the transmission status information of the service data.

It is understandable that in a service data transmission scenario where the service data sender is a data center and the service data receiver is a user terminal, the network access device on the data center side can monitor a sending status of the service data and obtain the transmission status information of the service data.

In an optional implementation, the transmission status information includes a transmission quality parameter of the service data. The process of obtaining the transmission status information of the service data by the network access device includes: obtaining the transmission quality parameter of the service data to obtain the transmission status information of the service data. The transmission quality parameters of the service data can include parameters configured to characterize the transmission quality of the service data, such as a signal-to-noise ratio, a packet loss rate, a jitter and/or a delay of the service data during the transmission process, which are not limited by the embodiments of the disclosure. In some embodiments, when the transmission quality parameters are the packet loss rate, the jitter, and the delay, if the transmission quality parameter is greater than a parameter threshold, the transmission status information indicates that the fixed network is faulty; if the transmission quality parameter is less than or equal to the parameter threshold, the transmission status information indicates that the fixed network is normal. In other embodiments, when the transmission quality parameter is the signal-to-noise ratio, if the transmission quality parameter is less than or equal to a parameter threshold, the transmission status information indicates that the fixed network is faulty. If the transmission quality parameter is greater than the parameter threshold, the transmission status information indicates that the fixed network is normal.

It should be noted that in the embodiments of the disclosure, due to low costs of transmitting service data through wired links, a protection switching mechanism can be configured in a fixed network. The protection switching mechanism usually includes a working path and a protection path. In general, in the process of service data transmission, the service data can be transmitted through the working path. In the case of a failure of the working path, the service data can be switched to the protection path for transmission, so as to transmit the service data through the wired link. However, in order to prevent an interruption of service data transmission caused by an abnormality of the fixed network after the execution of the protection switching mechanism, the network access device can also monitor an execution condition of the protection switching mechanism, obtain execution information of the protection switching mechanism, and determine the execution information of the protection switching mechanism as the transmission status information of the service data. Therefore, after an execution abnormality of the protection switching mechanism, the network access device can access a wireless network through a wireless link to transmit the service data, so as to improve a transmission reliability of the service data.

In an optional implementation, in response to a protection switching in the network access device, the network access device switches from the working path to the protection path to transmit the service data. The process of obtaining the transmission status information of the service data by the network access device includes: after switching from the working path to the protection path, the transmission of the service data is monitored to obtain the execution information of the protection switching mechanism. It is understandable that the execution information of the protection switching mechanism can include information indicating that the service data is transmitted normally in the protection path, or information indicating that the service data fails to be transmitted in the protection path. Reasons for the failure of service data transmission in the protection path can include a failure of a network access device in the fixed network, or a breakage of a wired link in the fixed network.

In an optional implementation, whether the service data is transmitted normally in the protection path can be determined by a transmission quality parameter of the service data in the protection path. In some examples, in response to that the transmission quality parameter of the service data in the protection path does not meet a preset threshold condition, it is determined that the service data fails to be transmitted in the protection path. In response to that the transmission quality parameter of the service data in the protection path meets the preset threshold condition, it is determined that the service data is successfully transmitted in the protection path. In the embodiments of the disclosure, the preset threshold condition can be either a parameter threshold or a range of values, depending on the specific transmission quality parameter.

In some examples, in response to that the transmission quality parameter of the service data in the protection path is greater than a parameter threshold, it is determined that the service data fails to be transmitted in the protection path. In response to the transmission quality parameter of the service data in the protection path is less than or equal to the parameter threshold, it is determined that the service data is successfully transmitted in the protection path. The parameter threshold can be determined based on actual needs, which is not limited in the embodiments of the disclosure. The reason why the transmission quality parameter is greater than the parameter threshold can include a poor network quality.

It should be noted that in the embodiments of the disclosure, in order to further reduce a transmission cost of the service data, a plurality of wired paths in the fixed network can be configured to transmit the service data, and a wired path can transmit the service data from the service data sender to the service data receiver. In general, a main working path can be configured to transmit the service data, after the main working path is faulty, at least one standby wired path can be configured to transmit the service data. In the process of transmitting the service data, the service data can be transmitted through a main working path. In the case of failure of the main working path, the service data can be switched to a main protection path, and in the case of failure of the main protection path, the service data can be switched to a standby working path for transmission, and in the case of failure of the standby working path, the service data can be transmitted through a standby protection path. This way of transmitting the service data through the main and standby paths is called a nested protection switching mechanism.

However, in order to prevent an interruption of the transmission of the service data caused by an abnormal execution of the nested protection switching mechanism, the network access device can also monitor an execution condition of the nested protection switching mechanism, obtain execution information of the nested protection switching mechanism, and determine the execution information of the nested protection switching mechanism as the transmission status information of the service data.

In an optional implementation, the fixed network can use two sets of main and standby wired paths to transmit the service data in a nested manner, in response to a protection switching in the network access device. The network access device switches from the main working path to the main protection path to transmit the service data. The process of obtaining the transmission status information of the service data by the network access device includes: after switching from the main working path to the main protection path, in response to the main protection path being faulty, switching from the main protection path to the standby working path; after the standby working path being faulty, switching from the standby working path to the standby protection path, and monitoring the transmission condition of the service data to obtain the execution information of the nested protection switching mechanism.

In an example, the execution information of the nested protection switching mechanism can include: information indicating that after switching from the main working path to the main protection path, the service data transmits normally in the main protection path; or, information indicating that after switching from the main working path to the main protection path, the main protection path is faulty, and after switching from the main protection path to the standby working path, the service data transmits normally in the standby working path; or, information indicating that after switching from the main working path to the main protection path, the main protection path is faulty, and after switching from the main protection path to the standby working path, the standby working path is faulty, and after switching from the standby working path to the standby protection path, the service data transmits normally in the standby protection path; or, information indicating that after switching from the main working path to the main protection path, the main protection path is faulty, and after switching from the main protection path to the standby working path, the standby working path is faulty, and after switching from the standby working path to the standby protection path, the service data fails to be transmitted in the standby protection path. The reasons for the failure of the transmission of the service data in the standby protection path can include a failure of a network access device in the fixed network, or a breakage of a wired link in the fixed network. It is understandable that when the service data transmitted normally in any path of the main working path, the main protection path, the standby working path and the standby protection path, the service data can be transmitted through the fixed network.

In an optional implementation, whether the service data is transmitted normally in the standby protection path can be determined by a transmission quality parameter of the service data in the standby protection path. In response to the transmission quality parameter of the service data in the standby protection path is greater than a parameter threshold, it is determined that the service data fails to be transmitted in the standby protection path. In response to the transmission quality parameter of the service data in the standby protection path is less than or equal to the parameter threshold, it is determined that the service data is successfully transmitted in the standby protection path.

At S202, in response to determining that the transmission status information indicates that the fixed network is faulty, the service data is sent to a wireless network access device.

In the embodiments of the disclosure, after the wireless network access device receives the service data, the service data can be transmitted to a network access device of a non-faulty fixed network. When the network access device determines that the fixed network carrying the service data currently is faulty, it can be determined that the wired link of the fixed network is abnormal. In order to ensure the transmission reliability of the service data, the network access device can be accessed to the wireless network access device through a wireless link to transmit the service data to the network access device of the non-faulty fixed network through the wireless network access device.

In an optional implementation, the transmission status information includes the transmission quality parameter of the service data. The process of the network access device determining that the transmission status information indicates whether the fixed network is faulty can include: in response to the transmission quality parameter does not meet a preset threshold condition, it is determined that the transmission status information indicates that the fixed network is faulty. In a case where the transmission quality parameter of the fixed network carrying the service data currently does not meet the preset threshold condition, the service data can be transmitted to the network access device of the non-faulty fixed network through the wireless network access device, so as to prevent the interruption of the transmission of the service data and further improve the transmission reliability of the service data.

In an optional implementation, in the transmission process of the service data, the network access device of the service data sender can monitor a transmission status of the service data. When the network access device of the service data sender determines that the transmission status information indicates that the fixed network is faulty, the service data is sent to the wireless network access device to transmit the service data to the network access device of the non-faulty fixed network through the wireless network access device.

It should be noted that in the embodiments of the disclosure, based on the wired link in the fixed network configured with the protection switching mechanism, when the service data is transmitted, the network access device of the service data sender can access the service data to the fixed network, and transmit the service data to the network access device of the service data receiver through a gateway device in the fixed network. In the process of transmitting service data in the fixed network, there can be two service data transmission modes, one is 1+1 mode, and the other is 1:n mode. In the 1 + 1 mode, the working path and the protection path between the network access devices transmit service data. In 1:n mode, n working paths of different service data between network access devices transmit service data, and one protection path does not transmit service data. After the fixed network is faulty, the network access device that fails can switch to the protection path to transmit service data. The value of n can be determined based on actual needs, which is not limited in the embodiments of the disclosure. For the example, the value of n can be 1.

In an optional implementation, in a case where the network access device is configured with a protection switching mechanism, the protection switching mechanism includes a working path and a protection path. In response to an abnormal transmission of service data in the working path, the network access device switches from the working path to the protection path, and the transmission status information can include the execution information of the protection switching mechanism. The process of the network access device determining the transmission status information indicating whether the fixed network is faulty can include: in response to the execution information including information indicating that the service data, after switching from the working path to the protection path, fails to be transmitted in the protection path, determining that the transmission status information indicates that the fixed network is faulty. It can monitor the fixed network with the protection switching mechanism. In a case where the service data fails to be transmitting after executing the protection switching mechanism, the service data is transmitted through the wireless network access device to the network access device of the non-faulty fixed network, so as to further improve the transmission reliability of the service data in the fixed network with the protection switching mechanism.

In an optional implementation, the process of the network access device determining whether the service data fails to be transmitted in the protection path can include: in response to transmission quality parameter of the service data in the protection path does not meet a preset threshold condition, determining that the service data fails to be transmitted in the protection path. It can monitor the fixed network with the protection switching mechanism. After the protection switching mechanism is implemented, and the transmission quality parameter carrying the service data does not meet the preset threshold condition, the service data is transmitted to the network access device of the non-faulty fixed network through the wireless network access device, which prevents the transmission interruption of the service data, and further improves the transmission reliability of the service data.

In an optional implementation, in the nested protection switching mechanism, the nested protection switching mechanism can include a main working path, a main protection path, a standby working path and a standby protection path. In response to an abnormal transmission of service data in the main working path, the network access device switches from the main working path to the main protection path, and the transmission status information can include execution information of the nested guard switching mechanism. The process of the network access device determining the transmission status information indicates whether the fixed network is faulty can include: in response to the execution information including information indicating that the main protection path is faulty after switching from the main working path to the main protection path, the standby working path is faulty after switching from the main protection path to the standby working path, and the service data, after switching from the standby working path to the standby protection path, fails to be transmitted in the standby protection path, determining that the transmission status information indicates that the fixed network is faulty. The fixed network with the nested protection switching mechanism can be monitored. In the case that the service data still fails to be transmitted after the nested protection switching mechanism is executed, the service data is transmitted to the network access device of the non-faulty fixed network through the wireless network access device to further improve the transmission reliability of the service data in the fixed network configured with the protection switching mechanism.

In an optional implementation, the process of the network access device determining whether the service data fails to be transmitted in the standby protection path can include: in response to a transmission quality parameter of the service data in the standby protection path does not meet a preset threshold condition, determining that the service data fails to be transmitted in the protection path. The fixed network configured with the nested protection switching mechanism can be monitored. After the nested protection switching mechanism is implemented, and the transmission quality parameter of the standby protection path carrying the service data does not meet the preset threshold condition, the service data is transmitted to the network access device of the network access device of the non-faulty fixed network through the wireless network access device, so as to prevent the transmission interruption of the service data and further improve the transmission reliability of the service data.

It is understandable that during the transmission process of the service data through the protection path, the network access device can monitor the transmission status of the service data. In a case where the network access device determines that the transmission status information indicates that the fixed network is faulty, the service data can be sent to the wireless network access device to transmit the service data to the network access device of the non-faulty fixed network through the wireless network access device.

In an optional implementation, when there is no fault with the fixed network, the service data can be transmitted on a plurality of paths, or the service data is not transmitted on at least one protection path. In some examples, when the faulty fixed network returns to normal (i.e., fault-free), the service data can be transmitted on the protection path and the working path, or the service data can be transmitted on the working path but not on the protection path. In other examples, when the faulty fixed network returns to normal, the service data can be transmitted on the main working path, the main protection path, the standby working path, and the standby protection path, or the service data does not be transmitted on at least one protection path and is transmitted on the remaining paths.

In an optional implementation, in order to ensure that the network access device can access the wireless access device, the network access device of the fixed network is equipped with a wireless network module. In a specific implementation, the network access device sends an access request to the wireless access device through the wireless network module to establish a wireless connection with the wireless access device. The wireless network module can be a 5G module, a 4G module or a satellite network module, etc., which is not limited in the embodiments of the disclosure. When the fixed network carrying the service data is faulty, according to the present disclosure, the network access device can be accessed to the wireless access device through the wireless link, so as to transmit the service data to the network access device of the non-faulty fixed network through the wireless access device to ensure the transmission reliability of the service data.

It should be noted that in the embodiments of the disclosure, after the network access device sends the service data to the wireless network access device, the process of the wireless network access device transmitting the service data to the non-faulty fixed network can include: transmitting the service data to the non-faulty fixed network with the same or different access network type of the network access device. For example, if the network access device is a network access device in the SPN network, the wireless network access device can transmit the service data to a non-faulty SPN network; or, the wireless network access device can transmit the service data to a non-faultyy PTN network, or the wireless network access device can transmit the service data to a non-faultyy IPRAN network. It is understandable that in the embodiments of the disclosure, after the fixed network is faulty, a function of using different types of networks to transmit the service data needs to be pre-configured.

It should be noted that in the embodiments of the disclosure, after the network access device determines the fixed network accessed by the network access device fault repair, a connection with the wireless network access device can be disconnected, the service data can be transmitted through the fixed network accessed by the network access device, to reduce the transmission cost of the service data.

The above mainly introduces the solution provided by the embodiments of the disclosure from the perspective of the network access device. It is understandable that, in order to achieve the above functions, the network access device contains corresponding hardware structure and/or software modules to perform each function. It should be easy for those skilled in the art to realize that this disclosure can be realized in the form of hardware or a combination of hardware and computer software, in combination with units and algorithm steps of each example described in the embodiments disclosed in the disclosure. Whether a function is implemented by hardware or computer software driven hardware depends on the specific application and design constraints of the technical solution. Those skilled in the art can use different methods to implement the described functions for each specific application, but those implementations should not be considered beyond the scope of this disclosure.

The embodiments of the disclosure can divide function units of a server according to the above method examples. For example, it can divide each function module according to each function, or it can integrate two or more functions into one processing module. The above integrated modules can be implemented in the form of hardware or software function modules. It should be noted that the division of modules in the embodiments of the disclosure is schematic, which is only a logical function division, and there can be another division method in actual implementation.

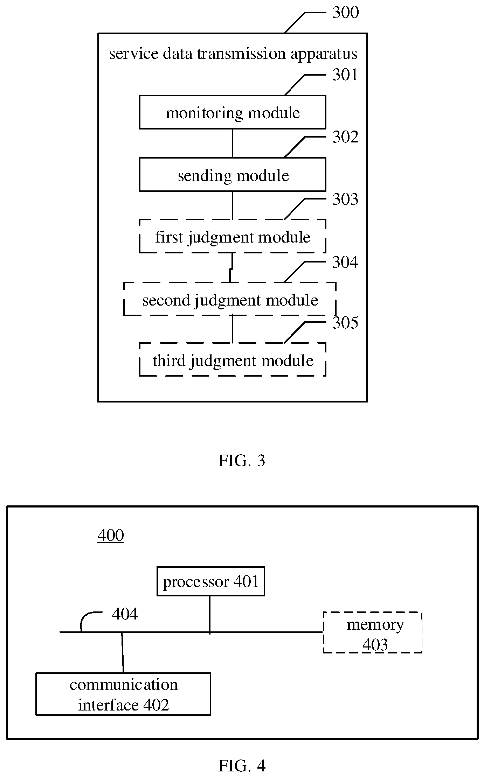

In a case of using the corresponding functions to divide each functional module, the embodiments of the disclosure provides a service data transmission apparatus, which can be included in a network access device of a fixed network or can be a chip applied to a network access device. FIG. 3 is a schematic block diagram of a service data transmission apparatus according to an exemplary embodiment of the disclosure. As shown in FIG. 3, a service data transmission apparatus 300 includes:
a monitoring module 301, configured to obtain, during a transmission process of service data, transmission status information of the service data; and
a sending module, configured to send, in response to determining that the transmission status information indicates that the fixed network is faulty, the service data to a wireless network access device, wherein the wireless network access device is configured to transmit the service data to a network access device of a non-faulty fixed network.

Optionally, the transmission status information includes a transmission quality parameter of the service data. The service data transmission apparatus 300 also includes a first judgment module 303, which is configured to: in response to the transmission quality parameter does not meet a preset threshold condition, determine that the transmission status information indicates that the fixed network is faulty.

Optionally, the fixed network is configured with a protection switching mechanism. The protection switching mechanism includes a working path and a protection path, and the transmission status information includes execution information of the protection switching mechanism. The service data transmission apparatus 300 further includes a second judgment module 304, which is configured to: in response to the execution information comprising information indicating that the service data fails to be transmitted in the protection path after switching from the working path to the protection path, determining that the transmission status information indicates that the fixed network is faulty.

Optionally, the second judgment module 304 is configured to in response to that a transmission quality parameter of the service data in the protection path does not meet a preset threshold condition, determine that the service data fails to be transmitted in the protection path.

Optionally, the fixed network is configured with a nested protection switching mechanism. The nested protection switching mechanism includes a main working path, a main protection path, a standby working path, and a standby protection path, and the transmission status information includes execution information of the nested protection switching mechanism. The service data transmission apparatus 300 further includes a third judgment module 305, which is configured to: in response to the execution information comprising information indicating that the main protection path is faulty after switching from the main working path to the main protection path, the standby working path is faulty after switching from the main protection path to the standby working path, and the service data, after switching from the standby working path to the standby protection path, fails to be transmitted in the standby protection path, determining that the transmission status information indicates that the fixed network is faulty.

Optionally, the third judgment module 305 is configured to: in response to that a transmission quality parameter of the service data in the standby protection path does not meet a preset threshold condition, determine that the service data fails to be transmitted in the protection path.

Optionally, the network access device of the fixed network is equipped with a wireless network module. The sending module 302 is configured to send an access request to the wireless network access device through the wireless network module.

FIG. 4 is a schematic block diagram of a chip according to an exemplary embodiment of the disclosure. As shown in FIG. 4, a chip 400 includes one or more than two (including two) processors 401 and a communication interface 402. The communication interface 402 can support a server to perform data sending and receiving steps in the above service data transmission method, and the processor 401 can support the server to perform data processing steps in the above service data transmission method.

Optionally, as shown in FIG. 4, the chip 400 also includes a memory 403, the memory 403 can include a read-only memory and a random access memory, and provide operation instructions and data to the processor. Part of the memory can also include a non-volatile random access memory (NVRAM).

In some implementations, as shown in FIG. 4, the processor 401 performs corresponding operation by invoking operation instructions (the operation instructions can be stored in an operating system) stored in the memory. The processor 401 controls any one of processing operations of a terminal device, and the processor can also be called a central processing unit (CPU). The memory 403 can include the read-only memory and the random access memory, and provide instructions and data to the processor 401. Part of the memory 403 can also include the NVRAM. In applications, the memory, the communication interface and the memory are coupled together through a bus system. In addition to a data bus, the bus system can also include a power bus, a control bus and a status signal bus. However, for the sake of clarity, various buses in FIG. 4 are all marked as a bus system 404.

The method revealed in the above embodiments of the disclosure can be applied to a processor or implemented by a processor. The processor may be an integrated circuit chip with signal processing capabilities. In an implementation process, each step of the above method can be completed by an integrated logic circuit of the hardware in the processor or an instruction in the form of software. The above processors can be a general-purpose processor, a digital signal processing (DSP), an application specific integrated circuit (ASIC), a field-programmable gate array (FPGA) or other programmable logic devices, a discrete gate or a transistor logic member, a discrete hardware component. The methods, steps and logic diagrams disclosed in the embodiments of the disclosure can be realized or executed. The general-purpose processor can be a microprocessor, or the processor can also be any conventional processor. The steps in combination with the method disclosed in the embodiments of the disclosure can be directly reflected as being executed and completed by a hardware decoding processor, or being executed and completed by a combination of hardware structure and software modules in the decoding processor. The software module can be located in the random access memory, a flash memory, the read-only memory, a programmable read-only memory or an electrically erasable programmable memory, a register and other well-known storage medium in this field. The storage medium is located in the memory, and the processor reads information in the memory, and the steps of the above method is completed in combination with its hardware.

An exemplary embodiment of the disclosure further provides an electronic device, including at least one processor and a memory communicatively connected to the at least one processor. The memory stores computer programs executable by the at least one processor, and the computer programs are executed by the at least one processor to cause the electronic device to execute the method according to the embodiments of the disclosure.

An exemplary embodiment of the disclosure further provides a non-transitory computer-readable storage medium having computer programs stored thereon. When the computer programs are executed by a processor of a computer, the computer executes the method according to the embodiments of the disclosure.

An exemplary embodiment of the disclosure further provides a computer program product including computer programs. When the computer programs are executed by a processor of a computer, the computer executes the method according to the embodiments of the disclosure.

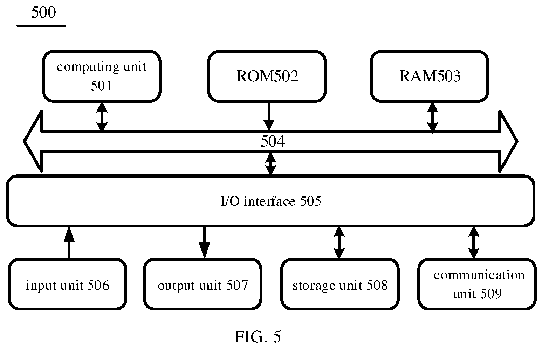

As shown in FIG. 5, FIG. 5 can be taken as a structural block diagram of an electronic device 500 of a network access device of the disclosure. The electronic device 500 can be an example of a hardware device that can be applied to various aspects of the disclosure. The electronic device is intended to represent various forms of digital electronic computer devices, such as a laptop, a desktop computer, a workbench, a personal digital assistant, a server, a blade server, a mainframe computer, and other suitable computers. The electronic device can also represent various forms of mobile apparatuses, such as a personal digital processing, a cellular phone, a smartphone, a wearable device, and other similar computing apparatuses. Components, connections and relationships between the components, and functions of the components shown in this disclosure are only examples and are not intended to limit implementations of the disclosure described and/or required herein.

As shown in FIG. 5, the electronic device 500 includes a computing unit 501 for performing various appropriate actions and processes based on computer programs stored in a Read-Only Memory (ROM) 502 or computer programs loaded from a storage unit 508 to a Random Access Memory (RAM) 503. In the RAM 503, various programs and data required for the operation of the device 500 are stored. The computing unit 501, the ROM 502, and the RAM 503 are connected to each other through a bus 504. An input/output (I/O) interface 505 is also connected to the bus 504.

Components in the device 500 are connected to the I/O interface 505, including: an input unit 506, an output unit 507, a storage unit 508 and a communication unit 509. The input unit 506 can be any type of device that can input information to the electronic device 500. The input unit 506 can receive input digital or character information and generate key signal input related to the user setting and/or function control of the electronic device. The output unit 507 can be any type of device that can present information, and can include but not be limited to a display, a speaker, a video/audio output terminals, a vibrator and/or a printer. The storage unit 504 can include but not be limited to a disk, a CD. The communication unit 509 allows the electronic device 500 to exchange information/data with other devices through a computer network such as the Internet and/or various telecommunication networks, and can include but not be limited to a modem, a network card, an infrared communication device, a wireless communication transceiver and/or a chipset, such as a Bluetooth TM device, a WiFi device, a WiMax device, a cellular communication device and/or analogues.

The computing unit 501 may be various general-purpose and/or dedicated processing components with processing and computing capabilities. Some examples of the computing unit 501 include, but are not limited to, a Central Processing Unit (CPU), a Graphics Processing Unit (GPU), various dedicated AI computing chips, various computing units that run machine learning (ML) model algorithms, a Digital Signal Processor (DSP), and any appropriate processor, controller and microcontroller. The computing unit 501 executes the various methods and processes described above. In some embodiments, the method of the embodiments of the disclosure may be implemented as a computer software program, which is tangibly contained in a machine-readable medium, such as the storage unit 504. In some embodiments, part or all of the computer programs may be loaded and/or installed on the electronic device 500 via the ROM 502 and/or the communication unit 509. In some embodiments, the computing unit 501 may be configured to perform the method of the embodiments of the disclosure in any other suitable manner (for example, by means of firmware).

Program codes configured to implement the method of the disclosure may be written in any combination of one or more programming languages. These program codes may be provided to processors or controllers of general-purpose computers, dedicated computers, or other programmable data processing devices, so that the program codes, when executed by the processors or controllers, enable the functions/operations specified in the flowchart and/or block diagram to be implemented. The program codes may be executed entirely on the machine, partly executed on a machine, partly executed on the machine and partly executed on the remote machine as an independent software package, or entirely executed on the remote machine or server.

In the context of the disclosure, a machine-readable medium may be a tangible medium that may contain or store a program for use by or in combination with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage medium include electrical connections based on one or more wires, portable computer disks, hard disks, RAMs, ROMs, Electrically Programmable Read-Only-Memories (EPROM), flash memories, fiber optics, Compact Disc Read-Only Memories (CD-ROM), optical storage devices, magnetic storage devices, or any suitable combination of the foregoing.

As used in the disclosure, the terms "machine-readable medium" and "computer-readable medium" refer to any computer program product, device, and/or apparatus (e.g., disk, disc, memory, programmable logic device (PLD)) configured to provide machine instructions and/or data to a programmable processor, including a machine-readable medium that receives machine instructions as machine-readable signals. The term "machine-readable signal" refers to any signal configured to provide machine instructions and/or data to a programmable processor.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: Local Area Network (LAN), Wide Area Network (WAN), the Internet and a block-chain network.

The computer system may include a client and a server. The client and server are generally remote from each other and interacting through a communication network. The client-server relation is generated by computer programs running on the respective computers and having a client-server relation with each other.

In the above embodiments, it can be achieved in whole or in part by software, hardware, firmware or any combination thereof. When implemented using software, it can be implemented in the form of computer program products in whole or in part. The computer program product includes one or more computer programs or instructions. When loading and executing the computer program or instruction on a computer, the processes or functions described in the embodiments of the disclosure are wholly or partially executed. The computer can be a general computer, a special computer, a computer network, a terminal, a user device or other programmable apparatus. The computer program or instruction can be stored in a computer readable storage medium, or transmitted from one computer-readable storage medium to another computer-readable storage medium. For example, the computer program or instruction can be transmitted from a website site, a computer, a server or a data center to another website site, computer, server or data center through wired or wireless means. The computer-readable storage medium can be any available medium that the computer can access or a server, a data center and other data storage devices that integrate one or more available medium The available medium can be a magnetic medium, such as a floppy disk, a hard disk, a tape; can also be an optical medium, for example, a digital video disc (DVD); can also be a semiconductor medium, such as a solid state drive (SSD).

Although the disclosure is described in combination with specific characteristics and its embodiments, the disclosure can be modified and combined without breaking away from the spirit and scope of this disclosure. Accordingly, the specification and the accompanying drawings are only an illustrative description of this disclosure as defined by the attached claims, and are regarded as any and all modifications, changes, combinations or equivalents that have been covered within the scope of this disclosure. Those skilled in the art can make various changes and variations to this disclosure without breaking away from the spirit and scope of this disclosure. If these modifications and variants of this disclosure are within the scope of this disclosure claim and its equivalent technology, this disclosure also intends to include these modifications and variants.

## Claims

1. A service data transmission method, comprising:
obtaining, during a transmission process of service data of a fixed network, transmission status information of the service data; and
in response to determining that the transmission status information indicates that the fixed network is faulty, sending the service data to a wireless network access device, wherein the wireless network access device is configured to transmit the service data to a network access device of a non-faulty fixed network.

2. The method of claim 1, wherein the transmission status information comprises a transmission quality parameter of the service data;
wherein determining that the transmission status information indicates whether the fixed network is faulty, comprises:
in response to the transmission quality parameter does not meet a preset threshold condition, determining that the transmission status information indicates that the fixed network is faulty.

3. The method of claim 1, wherein the network access device is configured with a protection switching mechanism, the protection switching mechanism comprises a working path and a protection path, and the transmission status information comprises execution information of the protection switching mechanism;
wherein determining that the transmission status information indicates whether the fixed network is faulty, comprises:
in response to the execution information comprising information indicating that the service data fails to be transmitted in the protection path after switching from the working path to the protection path, determining that the transmission status information indicates that the fixed network is faulty.

4. The method of claim 3, wherein determining whether the service data fails to be transmitted in the protection path, comprises:
in response to that a transmission quality parameter of the service data in the protection path does not meet a preset threshold condition, determining that the service data fails to be transmitted in the protection path.

5. The method of claim 1, wherein the fixed network is configured with a nested protection switching mechanism, the nested protection switching mechanism comprises a main working path, a main protection path, a standby working path, and a standby protection path, and the transmission status information comprises execution information of the nested protection switching mechanism;
wherein determining that the transmission status information indicates whether the fixed network is faulty, comprises:
in response to the execution information comprising information indicating that the main protection path is faulty after switching from the main working path to the main protection path, the standby working path is faulty after switching from the main protection path to the standby working path, and the service data, after switching from the standby working path to the standby protection path, fails to be transmitted in the standby protection path, determining that the transmission status information indicates that the fixed network is faulty.

6. The method of claim 5, wherein determining whether the service data fails to be transmitted in the standby protection path, comprises:
in response to that a transmission quality parameter of the service data in the standby protection path does not meet a preset threshold condition, determining that the service data fails to be transmitted in the protection path.

7. The method of any one of claims 3-6, wherein in response to there being no fault with the fixed network, the service data is transmitted on a plurality of paths, or the service data is not transmitted on at least one protection path.

8. The method of any one of claims1-7, wherein the network access device of the fixed network is configured with a wireless network module, and the method further comprises:
sending an access request to the wireless network access device through the wireless network module.

9. A service data transmission apparatus, comprised in a network access device of a fixed network, comprising:
a monitoring module, configured to obtain, during a transmission process of service data, transmission status information of the service data; and
a sending module, configured to send, in response to determining that the transmission status information indicates that the fixed network is faulty, the service data to a wireless network access device, wherein the wireless network access device is configured to transmit the service data to a non-faulty fixed network.

10. An electronic device, comprising: a processor, and a memory for storing instructions, wherein when the instructions are executed by the processor, the method of any one of claims 1-7 is performed by the processor.

11. A non-transitory computer-readable storage medium having computer instructions stored thereon, wherein the computer instructions are configured to cause the computer to perform the method of any one of claims 1-8.

12. A computer program product comprising instructions, wherein when the instructions are executed by a processor, the method of any one of claims 1-8 is performed by the processor.
